# EUROPEAN PATENT APPLICATION

(11) **EP 4 120 121 A1**
(43) Date of publication of application: **18.01.2023**
(21) Application number: 21855272.7
(22) Date of filing: 30.06.2021
(51) Int. Cl.: G06K 9/00

(54) **FACE LIVENESS DETECTION METHOD, SYSTEM AND APPARATUS, COMPUTER DEVICE, AND STORAGE MEDIUM**

(30) Priority: 14.08.2020 CN 202010816200
(71) Applicant: Tencent Technology (Shenzhen) Company Limited, Shenzhen, Guangdong 518057 (CN)
(72) Inventor: LUO, Zhao, Shenzhen, Guangdong 518057 (CN); BAI, Kun, Shenzhen, Guangdong 518057 (CN)
(74) Representative: Eisenführ Speiser
(86) International application number: PCT/CN2021/103424
(87) International publication number: WO 2022/033219

(57) **Abstract**

A face liveness detection method, comprising: receiving an image to be detected sent by a terminal, the image to be detected comprising the face of an object to be detected; performing data enhancement processing on the image to be detected to obtain extended images corresponding to the image to be detected, the number of the extended images corresponding to the image to be detected being more than one; performing liveness detection on each extended image corresponding to the image to be detected to obtain intermediate detection results of each extended image, wherein a liveness detection model used for the liveness detection is obtained by performing model training on an initial neural network model according to a sample image and each extended sample image corresponding to the sample image; and fusing the intermediate detection results of each extended image to obtain a liveness detection result of the object to be detected in the image to be detected.

## Description

### RELATED APPLICATION

This application claims priority to Chinese Patent Application No. 202010816200X, entitled "METHOD, SYSTEM, AND APPARATUS FOR FACE LIVENESS DETECTION, COMPUTER DEVICE, AND STORAGE MEDIUM" filed on August 14th, 2020, which is incorporated by reference in its entirety.

### FIELD OF THE TECHNOLOGY

This application relates to the technical field of computers, and in particular, to a method, a system, and an apparatus for face liveness detection, a computer device, and a storage medium.

### BACKGROUND OF THE DISCLOSURE

Liveness detection techniques emerge with the development of computer technology, in order to authenticate a user's identity accurately and conveniently. The liveness detection techniques is capable to examine based on biometric features whether the user is a live person who is qualified, and is invulnerable against common attacks such as a photo, a deep fake, a mask, and a facial occlusion.

In conventional liveness detection, it is difficult to authenticate a user's identity accurately using only one image. Generally, in order to improve the detection accuracy, the user needs to upload multiple images for analysis, and the liveness detection cannot be performed until the multiple images are successfully uploaded. The liveness detection has low efficiency due to time consumption of transmitting the multiple images

### SUMMARY

A method for face liveness detection is provided. The method is executable by a computer device, and includes: receiving a to-be-detected image that is transmitted by a terminal, where the to-be-detected image includes a face of a to-be-detected object; performing data augmentation on the to-be-detected image to obtain extended images corresponding to the to-be-detected image, where a quantity of the extended images is greater than one; performing liveness detection on the extended images to obtain intermediate detection results for the extended images, where the liveness detection is performed through a liveness detection model, which is obtained by training an initial neural network model based on a sample image and extended sample images corresponding to the sample image; and fusing the intermediate detection results to obtain a liveness detection result with respect to the to-be-detected object being in the to-be-detected image.

Another method for face liveness detection is provided. The method is executable by a computer device, and includes: obtaining a to-be-detected image, where the to-be-detected image includes a face of a to-be-detected object; transmitting the to-be-detected image to a liveness detection server, where the to-be-detected image is configured to trigger the liveness detection server to: perform data augmentation on the to-be-detected image to obtain multiple extended images corresponding to the to-be-detected image, perform liveness detection on the extended images to obtain intermediate detection results for the extended images, and fuse the intermediate detection results to obtain a liveness detection result with respect to the to-be-detected object being in the to-be-detected image, where the liveness detection is performed through a liveness detection model, which is obtained by training an initial neural network model based on a sample image and extended sample images corresponding to the sample image; and receiving the liveness detection result returned by the liveness detection server.

A system for face liveness detection is provided, including a terminal and a liveness detection server, where: the terminal is configured to obtain a to-be-detected image, where the to-be-detected image includes a face of a to-be-detected object; the terminal is further configured to transmit the to-be-detected image to the liveness detection server; the liveness detection server is configured to receive the to-be-detected image, and perform data augmentation on the to-be-detected image to obtain extended images corresponding to the to-be-detected image, where a quantity of the extended images is greater than one; the liveness detection server is further configured to perform liveness detection on the extended images to obtain intermediate detection results for the extended images, and fuse the intermediate detection results to obtain a liveness detection result with respect to the to-be-detected object being in the to-be-detected image, where the liveness detection is performed through a liveness detection model, which is obtained by training an initial neural network model based on a sample image and extended sample images corresponding to the sample image; and the liveness detection server is further configured to return the liveness detection result to the terminal.

An apparatus for face liveness detection is provided, including: an obtaining module, configured to receive a to-be-detected image that is transmitted by a terminal, where the to-be-detected image includes a face of a to-be-detected object; an augmentation module, configured to perform data augmentation on the to-be-detected image to obtain extended images corresponding to the to-be-detected image, where a quantity of the extended images is greater than one; a detection module, configured to perform liveness detection on the extended images to obtain intermediate detection results for the extended images, where the liveness detection is performed through a liveness detection model, which is obtained by training an initial neural network model based on a sample image and extended sample images corresponding to the sample image; and a fusing module, configured to fuse the intermediate detection results to obtain a liveness detection result with respect to the to-be-detected object being in the to-be-detected image.

An apparatus for face liveness detection is provided, including: an obtaining module, configured to obtain a to-be-detected image, where the to-be-detected image includes a face of a to-be-detected object; a transmission module, configured to transmit the to-be-detected image to a liveness detection server, where the to-be-detected image is configured to trigger the liveness detection server to: perform data augmentation on the to-be-detected image to obtain multiple extended images corresponding to the to-be-detected image, perform liveness detection on the extended images to obtain intermediate detection results for the extended images, and fuse the intermediate detection results to obtain a liveness detection result with respect to the to-be-detected object being in the to-be-detected image, where the liveness detection is performed through a liveness detection model, which is obtained by training an initial neural network model based on a sample image and extended sample images corresponding to the sample image; and a receiving module, configured to receive the liveness detection result returned by the liveness detection server.

A computer device is provided, including a memory and one or more processors, where the memory stores computer-readable instructions, and the computer-readable instructions when executed by the one or more processors configure the one or more processors to implement: receiving a to-be-detected image that is transmitted by a terminal, where the to-be-detected image includes a face of a to-be-detected object; performing data augmentation on the to-be-detected image to obtain extended images corresponding to the to-be-detected image, where a quantity of the extended images is greater than one; performing liveness detection on the extended images to obtain intermediate detection results for the extended images, where the liveness detection is performed through a liveness detection model, which is obtained by training an initial neural network model based on a sample image and extended sample images corresponding to the sample image; and fusing the intermediate detection results to obtain a liveness detection result with respect to the to-be-detected object being in the to-be-detected image.

A computer device is provided, including a memory and one or more processors, where the memory stores computer-readable instructions, and the computer-readable instructions when executed by the one or more processors configure the one or more processors to implement: obtaining a to-be-detected image, where the to-be-detected image includes a face of a to-be-detected object; transmitting the to-be-detected image to a liveness detection server, where the to-be-detected image is configured to trigger the liveness detection server to: perform data augmentation on the to-be-detected image to obtain multiple extended images corresponding to the to-be-detected image, perform liveness detection on the extended images to obtain intermediate detection results for the extended images, and fuse the intermediate detection results to obtain a liveness detection result with respect to the to-be-detected object being in the to-be-detected image, where the liveness detection is performed through a liveness detection model, which is obtained by training an initial neural network model based on a sample image and extended sample images corresponding to the sample image; and receiving the liveness detection result returned by the liveness detection server.

One or more non-volatile computer-readable storage media are provided, storing computer-readable instructions, where the computer-readable instructions when executed by one or more processors configure the one or more processors to implement: receiving a to-be-detected image that is transmitted by a terminal, where the to-be-detected image includes a face of a to-be-detected object; performing data augmentation on the to-be-detected image to obtain extended images corresponding to the to-be-detected image, where a quantity of the extended images is greater than one; performing liveness detection on the extended images to obtain intermediate detection results for the extended images, where the liveness detection is performed through a liveness detection model, which is obtained by training an initial neural network model based on a sample image and extended sample images corresponding to the sample image; and fusing the intermediate detection results to obtain a liveness detection result with respect to the to-be-detected object being in the to-be-detected image.

One or more non-volatile computer-readable storage media are provided, storing computer-readable instructions, where the computer-readable instructions when executed by one or more processors configure the one or more processors to implement: obtaining a to-be-detected image, where the to-be-detected image includes a face of a to-be-detected object; transmitting the to-be-detected image to a liveness detection server, where the to-be-detected image is configured to trigger the liveness detection server to: perform data augmentation on the to-be-detected image to obtain multiple extended images corresponding to the to-be-detected image, perform liveness detection on the extended images to obtain intermediate detection results for the extended images, and fuse the intermediate detection results to obtain a liveness detection result with respect to the to-be-detected object being in the to-be-detected image, where the liveness detection is performed through a liveness detection model, which is obtained by training an initial neural network model based on a sample image and extended sample images corresponding to the sample image; and receiving the liveness detection result returned by the liveness detection server.

A computer program product or a computer program is provided, including computer-readable instructions, where the computer-readable instructions are stored in a computer-readable storage medium, where a processor of a computer device reads the computer-readable instructions from the computer-readable storage medium, and the processor when executing the computer-readable instructions configure the computer device to perform steps of the foregoing method for face liveness detection.

### BRIEF DESCRIPTION OF THE DRAWINGS

Hereinafter briefly illustrated are drawings configured to describe embodiments of the present disclosure, to clarify technical solutions in these embodiments. Apparently, the drawings in the following description show merely some embodiments of the present disclosure, and those skilled in the art may derive other drawings from following drawings without creative efforts.
Figure 1 is a diagram of an application environment of a method for face liveness detection according to an embodiment of the present disclosure.
Figure 2 is a schematic flowchart of a method for face liveness detection according to an embodiment of the present disclosure.
Figure 3 is a schematic diagram of random flipping on a to-be-detected image according to an embodiment of the present disclosure.
Figure 4 is a schematic diagram of random cropping on a to-be-detected image according to an embodiment of the present disclosure.
Figure 5 is a schematic diagram of random rotation of a to-be-detected image according to an embodiment of the present disclosure.
Figure 6 is a schematic diagram of random translation of a to-be-detected image according to an embodiment of the present disclosure.
Figure 7 is a schematic diagram of random occlusion on a to-be-detected image according to an embodiment of the present disclosure.
Figure 8 is a schematic diagram of random graying on a to-be-detected image according to an embodiment of the present disclosure.
Figure 9 is a schematic diagram of fusing detection results according to an embodiment of the present disclosure.
Figure 10 is a schematic flowchart of a method for face liveness detection according to a specific embodiment of the present disclosure.
Figure 11 is a schematic flowchart of a method for face liveness detection according to another embodiment of the present disclosure.
Figure 12 is a structural block diagram of an apparatus for face liveness detection according to an embodiment of the present disclosure.
Figure 13 is a structural block diagram of an apparatus for face liveness detection according to another embodiment of the present disclosure.
Figure 14 is a diagram of an internal structure of a server for face liveness detection according to an embodiment of the present disclosure.
Figure 15 is a diagram of an internal structure of a terminal according to an embodiment of the present disclosure.

### DESCRIPTION OF EMBODIMENTS

In order to clarify objectives, technical solutions, and advantages of the present disclosure, hereinafter the present disclosure is further illustrated in detail with reference to the drawings and embodiments. Herein the specific embodiments described are merely intended for explaining the present disclosure, not for limiting the present disclosure.

A method for face liveness detection according to embodiments of the present disclosure applies computer vision technology and machine learning technology, which belongs to the artificial intelligence (AI) technology, to implement the liveness detection.

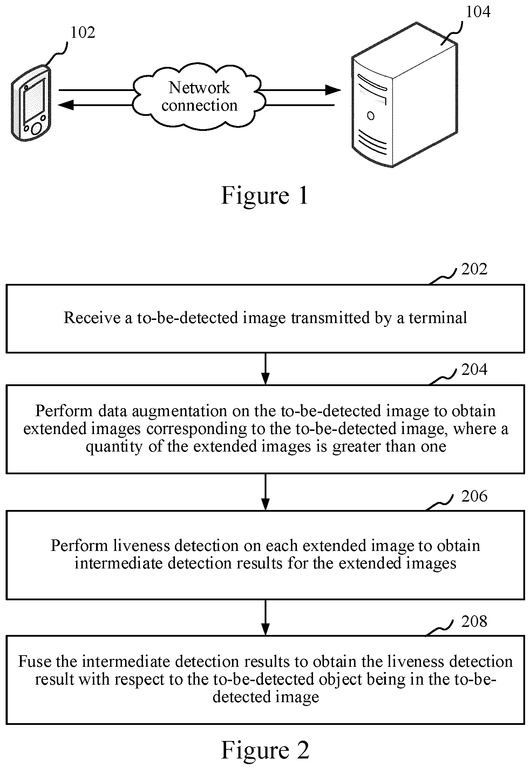

The method for face liveness detection according to an embodiment of the present disclosure may be applied to an application environment as shown in Figure 1. A terminal 102 communicates with a liveness detection server 104 via a network. Specifically, the liveness detection server 104 may receive a to-be-detected image transmitted by the terminal 102, perform data augmentation on the to-be-detected image to obtain extended images, of which a quantity is greater than one, corresponding to the to-be-detected image, perform liveness detection on the extended images to obtain intermediate detection results for the extended images, and fuse the intermediate detection results to obtain a liveness detection result with respect to the to-be-detected object being in the to-be-detected image. The liveness detection is performed through a liveness detection model obtained by training an initial neural network model based on a sample image and extended sample images corresponding to the sample image.

The method for face liveness detection is according to embodiments of the present disclosure. After the to-be-detected image transmitted by the terminal is received, the data augmentation is performed on the to-be-detected image to obtain the multiple extended images corresponding to the to-be-detected image, and the liveness detection is performed on the obtained extended images to obtain the intermediate detection results, such that the liveness detection result with respect to the to-be-detected object being in the to-be-detected image can be obtained according to the intermediate detection results. Hence, as long as the terminal uploads few to-be-detected images, for example, having a quantity of one, two, or three, the liveness detection is capable to perform based on the to-be-detected image(s). It is not necessary that the terminal uploads a large quantity of images, and hence a user needs not to wait for a long transmission delay due to uploading the images, improving user's experience. Moreover, it is the extended images obtained from the data augmentation that serve as an object of the liveness detection, which enriches data and improve accuracy of liveness detection.

In conventional technology, an object of the liveness detection is generally the whole person. That is, a to-be-detected image includes the whole person, and biometric features of the whole person are extracted from the image to implement the liveness detection. Contrarily, the method for face liveness detection in embodiments of the present disclosure used an image including the face of the to-be-detected object as the to-be-detected image, and the liveness detection is performed on the face to obtain the liveness detection result, such that it is determined whether the face is live. That is, the liveness detection is based on features of the face rather than the whole person.

The terminal 102 may be, but is not limited to, a personal computer, a notebook computer, a smartphone, a tablet computer, and a portable wearable device. The liveness detection server 104 may be implemented by an independent server or a server cluster including multiple servers.

In a specific application scenario, in a case that a face verification device needs to authenticate an identity of a user, an image of the user's face may be collected and transmitted to the liveness detection server via a network. The liveness detection server performs data augmentation on the facial image to obtain multiple extended images corresponding to the facial image, then performs liveness detection on the extended images to obtain multiple intermediate detection results, respectively, and obtains the liveness detection result with respect to the to-be-detected object being in the to-be-detected image according to the intermediate detection results. The liveness detection server determines the user passes the identity authentication when it determines that the facial image uploaded by the terminal includes a live face. The user need not upload a large quantity of facial images, which reduces a network transmission delay, decreases the waiting time of the user, and hence improves user's experience. The face verification device may be a phone, a face recognition machine, or another device having an image collector.

Reference is made to Figure 2. In an embodiment, a method for face liveness detection is provided. It is taken as an example for illustration that the method is applied to the liveness detection server 104 as shown in Figure 1. The method includes the following steps 202 to 208

In step 202, a to-be-detected image transmitted by a terminal is received.

The to-be-detected image is an image on which liveness detection is to be performed, and includes a face of a to-be-detected object. The liveness detection refers to examining according to biometric features in an image whether the image includes a live entity and whether such operating entity is qualified. Generally, the liveness detection is configured to determine whether the image includes a live person, and is applied to identity authentication scenarios which require invulnerability against photo attacks. The to-be-detected image may be a facial image, and may be an image including a face, a gesture, or an expression.

Specifically, the terminal may collect an image in real time via a local image collector, and use the collected image as the to-be-detected image. For example, the terminal 102 as shown in the Figure 1 uses the facial image of the user collected via a camera. The to-be-detected image may alternatively be an image that is locally exported by the terminal. The locally exported image which serves as the to-be-detected image may be a photo that is captured or stored in advance. Generally, the locally exported image would fail the verification during the liveness detection.

In some embodiments, the terminal may obtain multiple to-be-detected images, such as two or three to-be-detected images, and transmit these to-be-detected images to the liveness detection server. After receiving the to-be-detected images, the liveness detection server performs data augmentation respectively on the to-be-detected images to acquire additional extended images, and then performs liveness detection. In some embodiments, the terminal may obtain only one to-be-detected image, so as to further reduce transmission delay due to transmitting the image over the network and decrease a waiting time of the user. After the terminal uploads such to-be-detected image to the liveness detection server, the liveness detection server performs subsequent data augmentation on the only to-be-detected image.

In step 204, data augmentation is performed on the to-be-detected image to obtain extended images corresponding to the to-be-detected image. A quantity of the extended images corresponding to the to-be-detected image is greater than one.

Specifically, after receiving the to-be-detected image transmitted by the terminal, the liveness detection server may perform the data augmentation on the to-be-detected image to obtain multiple extended images. Each extended image is obtained by performing the data augmentation on the original to-be-detected image. The number of the extended images corresponding to the to-be-detected image is greater than one.

Generally, the quantity of the extended images obtained after the data augmentation is equal to a quantity of manners of the data augmentation that are applied. That is, different manners of the data augmentation are performed the to-be-detected image, and correspondingly the extended images of which the quantity is equal to the quantity of the manners are obtained.

In the field of machine learning, data augmentation is a means for enriching training samples. The original training samples when subject to the data augmentation is capable to generate a large number of new training samples. For example, one sample is extended into two or more samples. The new training samples can be used to train a machine learning model, in order to improve generalization of the obtained model. Herein the data augmentation is configured for expanding the to-be-detected images to acquire more images, rather than for training a model. The data augmentation performed on the to-be-detected image is capable to generate more images, that is, the extended images. Different extended images carry rich image information of different specific scenarios, and such information may support a model to output an accurate liveness detection result,

In one embodiment, performing the data augmentation on the to-be-detected image includes following steps. A first transformation parameter corresponding to geometric transformation of a preset type is obtained. The geometric transformation of the preset type is performed on the to-be-detected image according to the first transformation parameter.

Specifically, the data augmentation performed on the to-be-detected image may be geometric transformation. The geometric transformation refers to image transformation that does not change the content of the image, namely, does not change a pixel value. The geometric transformation of the preset type may include at least one of: image flipping, image cropping, image rotation, or image translation. The first transformation parameter is an operation parameter required for performing the geometric transformation, for example, may indicate a flipping direction, a dimension of a cropped area, a rotation angle, or a translation distance in pixels. The first transformation parameter may be randomly generated, for example, based on a random number, and alternatively may be from some fixed values that are preset.

In an embodiment, the liveness detection server may first generate a random number, determine the first transformation parameter corresponding to the geometric transformation of the preset type according to the random number, and then perform the data augmentation on the to-be-detected image according to the geometric transformation of the preset type and the first transformation parameter. Hence, the extended image corresponding to the geometric transformation of the preset type can be obtained.

In one embodiment, performing the geometric transformation on the to-be-detected image according to the first transformation parameter and the geometric transformation of the preset type corresponding to the first transformation parameter includes at least one of following steps. The to-be-detected image is flipped along a preset direction according to a random flipping parameter. The to-be-detected image is cropped according to a random cropping parameter. The to-be-detected image is rotated according to a random rotation parameter. The to-be-detected image is shifted along a preset direction according to a random translation parameter.

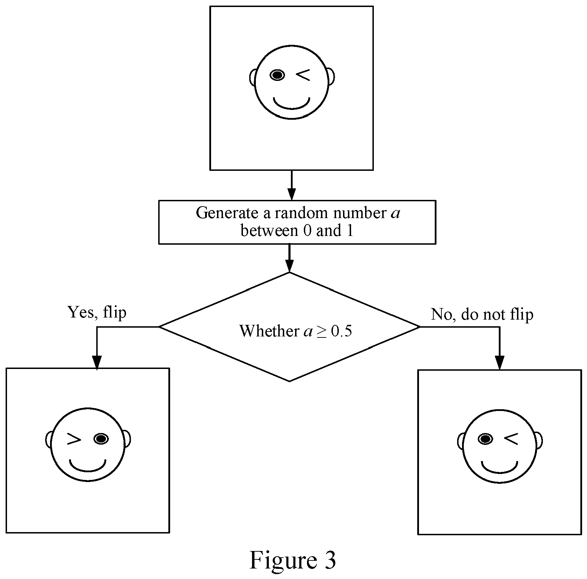

The to-be-detected image may be flipped along a preset direction according to a random flipping parameter. An example is as shown in Figure 3. The liveness detection server first generates a random number *a* between 0 and 1. In a case that the random number *a* is greater than or equal to 0.5, the to-be-detected image is flipped along a horizontal direction. In a case that the random number *a* is less than 0.5, the to-be-detected image is not flipped along the horizontal direction. In this way, the to-be-detected image would have a probability to be left-right flipped. It is appreciated that he to-be-detected image may be flipped along the vertical direction instead of the horizontal direction. Herein the random flipping of the to-be-detected image generates the extended image which is capable to provide information of the flipped to-be-detected image. After such extended image is inputted to a liveness detection model, the liveness detection model can "learn" the to-be-detected image from a new perspective, and hence additional image information of the to-be-detected image is obtained. Thereby, liveness detection based on the extended image leads to a more accurate intermediate detection result, and consequently a more reliable final liveness detection result can be obtained afterwards by fusing the intermediate detection results.

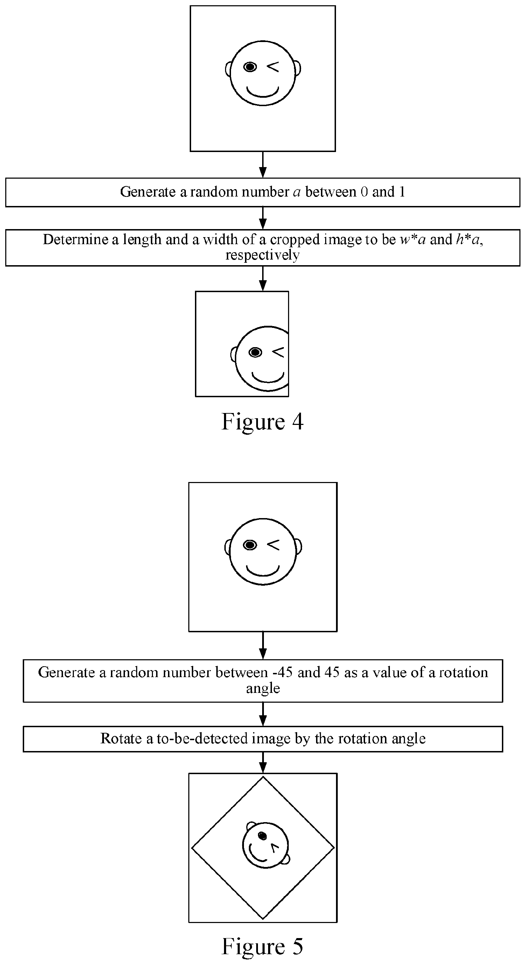

The to-be-detected image may be cropped according to a random cropping parameter. That is, a region may be obtained, through cropping, from the to-be-detected image as a new extended image, and a length and a width of the obtained region are determined based on a random number. An example is as shown in Figure 4. A length and a width of the original to-be-detected image are *w* and *h* respectively. When the to-be-detected image is inputted, the liveness detection server first generates a random number *a* between 0 and 1, and then determines the length and the width of the obtained region as *w*^{∗}*a* and *h*^{∗}*a,* respectively. The cropping may be performed first lengthwise and then widthwise. The cropping may start from a pixel having a x-axis coordinate equal to a random number between 0 and *w*-*w*^{∗}*a*, and having a y-axis coordinate equal to a random number between 0 and *h-h*^{∗}*a,* as long as the length and width of the obtained region are *w*^{∗}*a* and *h*^{∗}*a,* respectively. Thereby, different cropped extended images can be obtained according to a probability distribution. Herein the random cropping on the to-be-detected image generates the extended image which is capable to provide information of the cropped to-be-detected image. After such extended image is inputted to a liveness detection model, the liveness detection model can "learn" the to-be-detected image from a new perspective, i.e., a cropping perspective, and hence additional image information of the to-be-detected image is obtained. Thereby, liveness detection based on the extended image leads to a more accurate intermediate detection result, and consequently a more reliable final liveness detection result can be obtained afterwards by fusing the intermediate detection results.

The to-be-detected image may be rotated according to a random rotation parameter. That is, the to-be-detected image is rotated by a certain angle to acquire the extended image. An example is as shown in Figure 5. The liveness detection server may generate a random number between -45 and 45 by using a random number generator, as a value of the rotation angle, and then rotate the to-be-detected image clockwise or counterclockwise by the rotation angle. Herein the random rotation of the to-be-detected image generates the extended image which is capable to provide information of the rotated to-be-detected image. After such extended image is inputted to a liveness detection model, the liveness detection model can "learn" the to-be-detected image from a new perspective, and hence additional image information of the to-be-detected image is obtained. Thereby, liveness detection based on the extended image leads to a more accurate intermediate detection result, and consequently a more reliable final liveness detection result can be obtained afterwards by fusing the intermediate detection results.

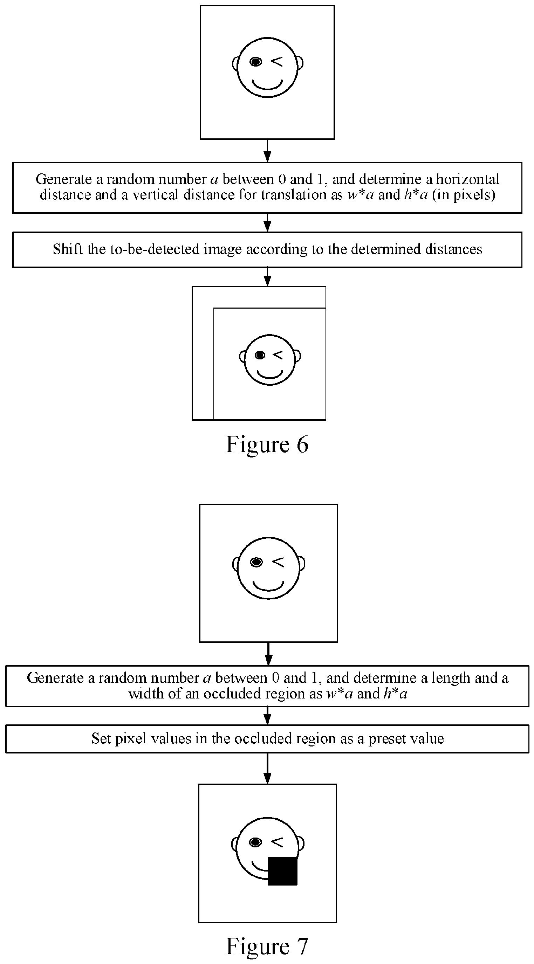

The to-be-detected image may be shifted along a preset direction according to a random translation parameter. That is, the to-be-detected image is shifted along the preset direction by a random quantity of pixels to obtain the extended image. An example is as shown in Figure 6. A width and a length of the original to-be-detected image are *w* and *h*, respectively. The liveness detection server first generates a random number *a* between 0 and 1, determines that a horizontal distance and a vertical distance for translation are *w*^{∗}*a* pixels and *h*^{∗}*a* pixels, respectively, according to the random number *a*, and then shits the original to-be-detected image according to the determined distances in pixels. The liveness detection server may shift the to-be-detected image only along the horizontal direction or only along the vertical direction. Herein the random translation of the to-be-detected image generates the extended image which is capable to provide information of the to-be-detected image under translational shift. After such extended image is inputted to a liveness detection model, the liveness detection model can "learn" the to-be-detected image from a new perspective, and hence additional image information of the to-be-detected image is obtained. Thereby, liveness detection based on the extended image leads to a more accurate intermediate detection result, and consequently a more reliable final liveness detection result can be obtained afterwards by fusing the intermediate detection results.

In one embodiment, performing the data augmentation on the to-be-detected image includes following steps. A second transformation parameter corresponding to image attribute adjustment of a preset type is obtained. An image attribute of the to-be-detected image is adjusted according to the second transformation parameter and the image attribute adjustment of the preset type.

Specifically, the data augmentation performed on the to-be-detected image may refer to image attribute adjustment. The image attribute adjustment refers to image transformation that changes the content of an image, namely, changes a pixel value. The image attribute adjustment of the preset type includes at least one of: random image occlusion, image brightness adjustment, image contrast adjustment, and graying. The second transformation parameter is an operation parameter required for performing the image attribute adjustment, for example, a location and a dimension of an occluded region of an image, a parameter for adjusting brightness of an image, a parameter for adjusting contrast of an image, or a parameter for graying on an image. The second transformation parameter may be randomly generated randomly generated, for example, based on a random number, and alternatively may be from some fixed values that are preset.

In an embodiment, the liveness detection server may first generate a random number, determine the second transformation parameter corresponding to the image attribute adjustment of the preset type according to the random number, and then perform the data augmentation on the to-be-detected image according to the image attribute adjustment of the preset type and the second transformation parameter. Hence, the extended image corresponding to the image attribute adjustment of the preset type can be obtained.

In one embodiment, performing the image attribute adjustment on the to-be-detected image according to the second transformation parameter and the image attribute adjustment of the preset type includes at least one of following steps. A random occluded region is determined in the to-be-detected image according to a random number, and a pixel value of each pixel in the random occluded region is set to be a preset value. The to-be-detected image is subject to graying to obtain a corresponding grayscale image. Brightness of the to-be-detected image is adjusted according to a random parameter for brightness adjustment. Contrast of the to-be-detected image is adjusted according to a random parameter for contrast adjustment.

The random occluded region may be determined in the to-be-detected image according to a random number, and a pixel value of each pixel in the random occluded region is set to be a preset value. That is, a rectangular region in the original to-be-detected image is occluded to simulate occlusion of the to-be-detected object in the to-be-detected image. As shown in Figure 7, a length and a width of the original to-be-detected image are *w* and *h*, respectively. The liveness detection server first generates a random number *a* between 0 and 1, then determines a length and a width of an occluded region as *w*^{∗}*a* and *h*^{∗}*a,* respectively. The occluded region may start from a pixel having a x-axis coordinate equal to a random number between 0 and *w*-*w*^{∗}*a*, and a y-axis coordinate equal to a random number between 0 and *h-h*^{∗}*a,* and thereby the occluded region is determined. Pixel values of the pixels in the occluded area are set to be the preset value to obtain the extended image of the occlusion. Herein random occlusion on the to-be-detected image generates the extended image which is capable to provide information of the occluded to-be-detected image. After such extended image is inputted to a liveness detection model, the liveness detection model can "learn" the to-be-detected image from a new perspective, and hence additional image information of the to-be-detected image is obtained. Thereby, liveness detection based on the extended image leads to a more accurate intermediate detection result, and consequently a more reliable final liveness detection result can be obtained afterwards by fusing the intermediate detection results.

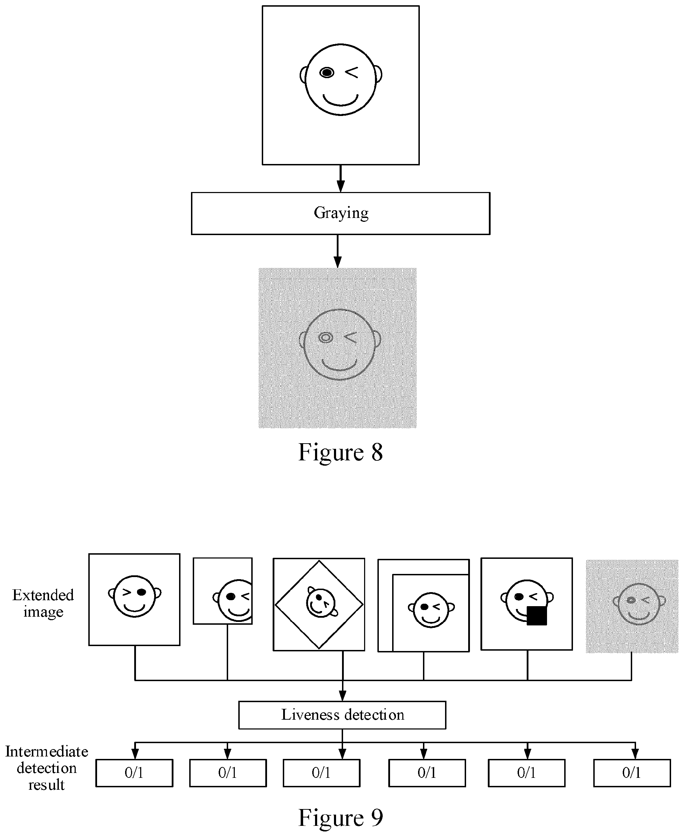

The to-be-detected image may be subject to graying to obtain a corresponding grayscale image. That is, the original to-be-detected image is converted into the grayscale image. An example is as shown in Figure 8. The grayscale of each pixel may be obtained according to a graying equation Gray = R^{∗}0.299 + G^{∗}0.587 + B^{∗}0.114, so that the extended image of the graying is obtained.

Brightness of the to-be-detected image may be adjusted according to a random parameter for brightness adjustment. That is, the brightness of the to-be-detected image is adjusted based on an RGB space and the random parameter of brightness adjustment, where RGB components of each pixel are adjusted to obtain the extended image. Contrast of the to-be-detected image may be adjusted according to a random parameter for contrast adjustment. That is, the contrast of the to-be-detected image is adjusted based on an RGB space to obtain the extended image. Similarly, brightness adjustment and the contrast adjustment on the to-be-detected image generate the extended images which are capable to provide information of the to-be-detected image under different illumination conditions. After such extended images are inputted to a liveness detection model, the liveness detection model can "learn" the to-be-detected image under such special conditions, and hence additional image information of the to-be-detected image is obtained. Thereby, liveness detection based on the extended image leads to a more accurate intermediate detection result, and consequently a more reliable final liveness detection result can be obtained afterwards by fusing the intermediate detection results.

The liveness detection server may perform one type of data augmentation on the to-be-detected image to obtain the extended image, or perform multiple types of data augmentation on the to-be-detected image at the same time to obtain the extended image. For example, both the brightness and the contrast of the to-be-detected image may be adjusted.

In the foregoing embodiments, additional images can be obtained by performing various types of data augmentation on the to-be-detected image, so that it is not necessary for the terminal to upload a large quantity of images. Afterwards, the multiple extended images serve as objects for liveness detection, which can improve accuracy of liveness detection.

In step 206, liveness detection is performed on each extended image to obtain intermediate detection results for the extended images.

Each intermediate detection result indicates either the extended image passing the liveness detection or the extended image failing the liveness detection. For example, the intermediate detection result being 1 indicates that the extended image tends to verify that the to-be-detected object of the to-be-detected image is live, and the intermediate detection result being 0 indicates that the extended image tends to verify that the to-be-detected object of the to-be-detected image being not live. A computer device may fusing the intermediate detection results of all extended images, so as to determine whether the to-be-detected object is live in the to-be-detected image.

Specifically, the liveness detection server may perform the liveness detection on the extended images through a classification means in the field of machine learning, such as a neural network, a support vector machine, a decision tree, or a random forest.

In some embodiments, the liveness detection server may perform liveness detection on the extended image through a liveness detection model, so as to obtain the corresponding intermediate detection results. The liveness detection model may be obtained in advance through model training. The liveness detection server may obtain a training sample, which includes a sample image, extended sample images corresponding to the sample image, and actual liveness categories corresponding to these images, and perform the model training by using the training sample, to obtain the liveness detection model. The extended sample images corresponding to the sample image are obtained through performing the data augmentation on the sample image, and the data augmentation includes at least one of following operations on the sample image: flipping, cropping, rotation, translation, random occlusion, graying, brightness adjustment, and contrast adjustment. The actual liveness category of the sample image is consistent with the actual liveness categories of the extended sample images corresponding to the sample image. Since the training sample for training the liveness detection model includes not only the sample image but also the corresponding extended sample images, the liveness detection model obtained through the training is capable to perform accurate detection on the extended images. The model is capable to deal with facial images in various special scenarios, thereby ensuring reliability of the predicted intermediate detection results for the extended images.

In this embodiment, the liveness detection model includes only one neural network. During training the liveness detection model, not only the sample image but also the extended images corresponding to the sample image serve as the training sample. Hence, such neural network can learn the capability of performing liveness detection on images in different special scenarios, which improves strength and accuracy of the detection capability of the liveness detection model.

In conventional technology, multiple neural networks are provided when constructing the liveness detection model, and the neural networks are sequentially trained based on the extended images of corresponding types, respectively. Multiple independent neural networks are obtained after the training, and each neural network merely has a capability of processing the extended image of the corresponding type. In addition, no augmentation is performed on the to-be-detected image for the liveness detection. Instead, the multiple neural networks process the to-be-detected image to obtain multiple intermediate detection results, respectively. Since each neural network merely has the capability of processing process extended images of a specific type, only one of the intermediate detection results is accurate while the other intermediate results are inaccurate. As a result, the final detection result also has low accuracy.

In one embodiment, the extended images corresponding to the to-be-detected image needs to be preprocessed before performing liveness detection on the extended images. Thereby, the extended images are adjusted to identical sizes and then inputted into the liveness detection model to extract image features of the extended images. The image features corresponding to the extended images can reflect image information of the to-be-detected image from different perspectives. Hence, the liveness detection model considers the image information of various perspectives, when performing classification based on the image feature to obtain the intermediate detection results corresponding to the extended images. Accuracy of the final liveness detection result is improved.

In some embodiments, the terminal may also extract image features of the to-be-detected image through an encryption network, which is in a trained encryption-detection model (i.e., a joint model for encryption and detection). The terminal performs image reconstruction based on the image features to obtain an encrypted image. After encryption of the encryption network, the encrypted image outputted by the encryption network differs greatly from the original to-be-detected image inputted into the encryption network. Thereby, privacy risks of the user are prevented during subsequent liveness detection on the encrypted image. The generated encrypted image is transmitted to the liveness detection server, and then the liveness detection server performs the foregoing data augmentation, such as Gaussian blurring, image flipping, or image rotation, on the encrypted image to obtain multiple corresponding extended images. The liveness detection is performed on these extended images through a detection network in the encryption-detection model to obtain the intermediate detection results. The intermediate detection results of the extended images are fused to obtain the liveness detection result with respect to the to-be-detected object being in the to-be-detected image. Thereby, security of the original to-be-detected image can be guaranteed during network transmission and during analysis and processing in the liveness detection, and privacy risks can be avoided for the user.

In one embodiment, the computer device may train the encryption network and the detection network in the integrated encryption and detection model jointly, so as to obtain the encryption-detection model. Specifically, the computer device may obtain each training sample in multiple training samples, and each training sample includes a sample image and an actual liveness category corresponding to the sample image. Each training sample further includes extended images of various types, which are obtained by performing various types of data augmentation on the sample image. The encryption network in an initial neural network model extracts the image features of the sample image, performs image reconstruction based on the image features to obtain an encrypted image corresponding to the sample image, and determine a first loss according to a difference between the sample image and the encrypted image. The detection network in the initial neural network model performs the liveness detection on the encrypted image to obtain a predicted liveness category corresponding to the sample image, and determines a second loss according to a difference between the actual liveness category and the predicted liveness category. The first loss serves as a reference for increasing the difference between the sample image and the encrypted image, and the second loss serves as a reference for reducing the difference between the actual liveness category and the predicted liveness category. Thereby, it is ensured that the trained encryption-detection model can encrypt the to-be-detected image while ensuring the accuracy of the liveness detection. Once a model parameter of the initial neural network model is adjusted according to the first loss and the second loss, the training process returns to the step of obtaining each training sample in the multiple training samples, and the training continues until the trained encryption-detection model is obtained. The computer device that trains the encryption-detection model may be a terminal or a server.

Generally, images are encrypted through a specific encryption algorithm (such as the hashing algorithm) when performing the image encryption. Distinguishability of the original image may be destroyed after the encryption algorithm is applied on such image, and hence the liveness detection cannot be directly performed on the encrypted image. For example, after the terminal encrypts the image through the algorithm and transmits the encrypted image to the server, the server needs to decrypt the encrypted image through a corresponding decryption means to obtain the original image before performing the liveness detection. In such case, the original image is still exposed during the liveness detection, raising privacy risks for the user. Contrarily, in embodiments of the present disclosure, the encryption network of the neural network encrypts the to-be-detected image to obtain the encrypted image which differs greatly from the original image, and hence the privacy information of the user is eliminated and not directly exposed to a server performing the liveness detection. The encrypted image carries identification information which is necessary for the liveness detection, such that the liveness detection server can perform the liveness detection directly on the encrypted image to obtain the liveness detection result. User's privacy can be protected in practice.

In step 208, the intermediate detection results for the extended images are fused to obtain the liveness detection result with respect to the to-be-detected object being in the to-be-detected image.

Specifically, the liveness detection server may fuse the intermediate detection results corresponding to the extended images to obtain the liveness detection result with respect to the to-be-detected object being in the to-be-detected image. For example, a weighted fusion or a voting fusion may be used to determine the final liveness detection result. As an example, the intermediate detection results being 0 and being 1, which are obtained in the foregoing step 206, are respectively counted to calculate respective proportions, and it is determined whether the to-be-detected object is live according to a result of the counting. Reference is made to Figure 9.

In one embodiment, the step 208 includes following steps. The intermediate detection results indicating the to-be-detected object being live are counted to obtain a first quantity. The intermediate detection results indicating the to-be-detected object being not live are counted to obtain a second quantity. The liveness detection result is determined to indicate the to-be-detected object being live, in a case that the first quantity is greater than the second quantity.

In one embodiment, the liveness detection server further returns the liveness detection result to the terminal.

An identity of a user needs to be authenticated in some application scenarios. It may be determined that the current user passes identity authentication and has a permission to perform a corresponding operation, such as log into a current account or perform payment in the current account, in a case that the terminal determines that the to-be-detected object being live in the to-be-detected image according to the liveness detection result.

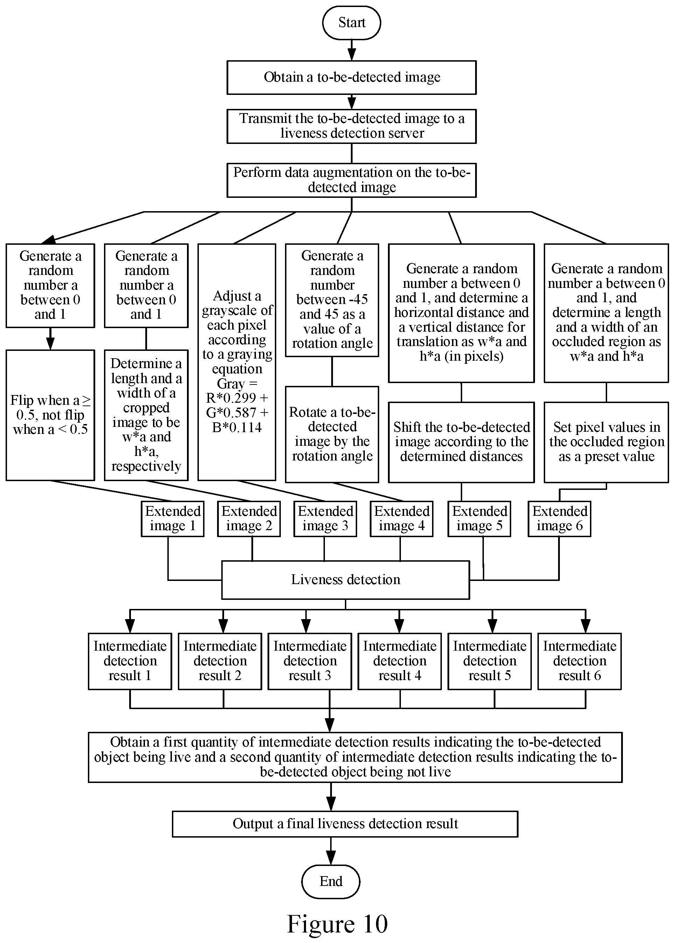

Figure 10 is a schematic flowchart of a method for face liveness detection according to an embodiment. As shown in Figure 10, the terminal obtains the original to-be-detected image, and transmits the to-be-detected image to the liveness detection server. The liveness detection server performs the data augmentation, which includes random horizontal flipping, random cropping, graying, random rotation, random translation, and random occlusions, on the to-be-detected image to obtain extended images 1 to 6, respectively. Then, the liveness detection server performs the liveness detection on the extended images to obtain the intermediate detection results 1 to 6, respectively. Finally, the liveness detection server fuses the intermediate detection results to output the final liveness detection result. Thereby, it is determined whether the to-be-detected object is live in the original to-be-detected image.

Hereinabove illustrated are the method for face liveness detection. After the to-be-detected image transmitted by the terminal is received, the data augmentation is performed on the to-be-detected image to obtain the multiple extended images corresponding to the to-be-detected image, and the liveness detection is performed on the obtained extended images to obtain the intermediate detection results, such that the liveness detection result with respect to the to-be-detected object being in the to-be-detected image can be obtained according to the intermediate detection results. Hence, as long as the terminal uploads few to-be-detected images, for example, having a quantity of one, two, or three, the liveness detection is capable to perform based on the to-be-detected image(s). It is not necessary that the terminal uploads a large quantity of images, and hence a user needs not to wait for a long transmission delay due to uploading the images, improving user's experience. Moreover, it is the extended images obtained from the data augmentation that serve as an object of the liveness detection, which enriches data and improve accuracy of liveness detection.

Although steps in the flowcharts of Figure 2 to Figure 10 are illustrated in a sequence indicated by arrows, it is not necessary to execute these steps according to the indicated sequence. Unless clearly specified in this specification, there is no strict limitation on a sequence of executing these steps, and the steps may be performed in another sequence. In addition, at least one step in Figure 2 to Figure 10 may include multiple sub-steps or multiple stages. It is not necessary to execute the sub-steps or the stages simultaneously. Rather, their execution may differ in time. Moreover, it is not necessary to execute the sub-steps or the stages sequentially. Rather, they may be executed in turn or alternately along with at least one sub-step or stage of another step.

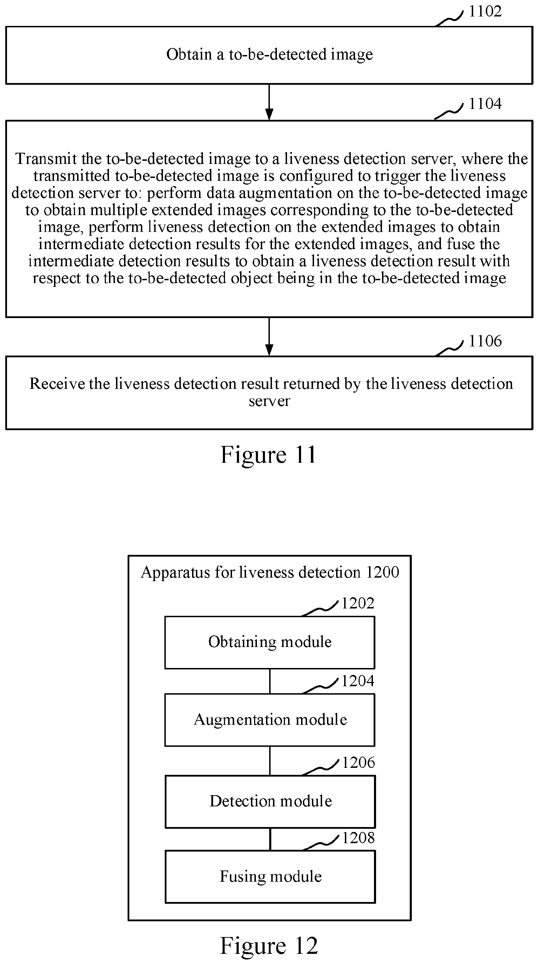

Reference is made to Figure 11. In one embodiment, a method for face liveness detection is provided. It is taken as an example the method is applied to the terminal 102 as shown in Figure 1. The method includes following steps 1102 to 1106.

In step 1102, a to-be-detected image is obtained.

The to-be-detected image is an image on which liveness detection is to be performed, and includes a face of a to-be-detected object. The liveness detection refers to examining according to biometric features in an image whether the image includes a live entity and whether such operating entity is qualified. Generally, the liveness detection is configured to determine whether the image includes a live person, and is applied to identity authentication scenarios which require invulnerability against photo attacks. The to-be-detected image may be a facial image, and may be an image including a face, a gesture, or an expression.

Specifically, the terminal may collect an image in real time via a local image collector, and use the collected image as the to-be-detected image. For example, the terminal 102 as shown in the Figure 1 uses the facial image of the user collected via a camera. The to-be-detected image may alternatively be an image that is locally exported by the terminal. The locally exported image which serves as the to-be-detected image may be a photo that is captured or stored in advance. Generally, the locally exported image would fail the verification during the liveness detection.

In step 1104, the to-be-detected image is transmitted to a liveness detection server. The transmitted to-be-detected image is configured to trigger the liveness detection server to perform following operations. That is, the liveness detection server is triggered to perform data augmentation on the to-be-detected image to obtain multiple extended images corresponding to the to-be-detected image, perform liveness detection on the extended images to obtain intermediate detection results for the extended images, and fuse the intermediate detection results to obtain a liveness detection result with respect to the to-be-detected object being in the to-be-detected image.

In some embodiments, the terminal may obtain multiple to-be-detected images, such as two or three to-be-detected images, and transmit these to-be-detected images to the liveness detection server. After receiving the to-be-detected images, the liveness detection server performs data augmentation respectively on the to-be-detected images to acquire additional extended images, and then performs liveness detection. In some embodiments, the terminal may obtain only one to-be-detected image, so as to further reduce transmission delay due to transmitting the image over the network and decrease a waiting time of the user. After the terminal uploads such to-be-detected image to the liveness detection server, the liveness detection server performs subsequent data augmentation on the only to-be-detected image.

After receiving the to-be-detected image transmitted by the terminal, the liveness detection server may perform the data augmentation on the to-be-detected image to obtain multiple extended images. Each extended image is obtained by performing the data augmentation on the original to-be-detected image. The number of the extended images corresponding to the to-be-detected image is greater than one. The liveness detection is performed through a liveness detection model. The liveness detection model may be obtained by training an initial neural network model based on a sample image and extended sample images corresponding to the sample image.

In step 1106, the liveness detection result returned by the liveness detection server is received.

Specifically, the liveness detection server may return the liveness detection result with respect to the to-be-detected object being in the to-be-detected image to the terminal. An identity of a user needs to be authenticated in some application scenarios. It may be determined that the current user passes identity authentication and has a permission to perform a corresponding operation, such as log into a current account or perform payment in the current account, in a case that the terminal determines that the to-be-detected object being live in the to-be-detected image according to the liveness detection result.

Hereinabove illustrated are the method for face liveness detection. The terminal obtains the to-be-detected image and then transmits the to-be-detected image to the liveness detection server. The liveness detection server performs the data augmentation on the to-be-detected image to obtain the multiple extended images corresponding to the to-be-detected image, and performs the liveness detection on the obtained extended images to obtain the intermediate detection results, thereby obtains the liveness detection result with respect to the to-be-detected object being in the to-be-detected image according to the intermediate detection results, and returns the liveness detection result to the terminal. Hence, as long as the terminal uploads few to-be-detected images, for example, having a quantity of one, two, or three, the liveness detection is capable to perform based on the to-be-detected image(s). It is not necessary that the terminal uploads a large quantity of images, and hence a user needs not to wait for a long transmission delay due to uploading the images, improving user's experience. Moreover, it is the extended images obtained from the data augmentation that serve as an object of the liveness detection, which enriches data and improve accuracy of liveness detection.

Reference is made to Figure 1. In one embodiment, a system for face liveness detection is provided. The system includes a terminal 102 and a liveness detection server 104.

The terminal 102 is configured to obtain a to-be-detected image, and transmit the to-be-detected image to the liveness detection server.

The liveness detection server 104 is configured to receive the to-be-detected image, and perform data augmentation on the to-be-detected image to obtain extended images corresponding to the to-be-detected image, where a quantity of the extended images is greater than one.

The liveness detection server 104 is further configured to perform liveness detection on each extended image to obtain a detection result corresponding to said extended image, and determine whether the to-be-detected object is live in the to-be-detected image according to the detection result corresponding to each extended image. The liveness detection is performed through a liveness detection model, which is obtained by training an initial neural network model based on a sample image and extended sample images corresponding to the sample image.

In one embodiment, the liveness detection server 104 is further configured to obtain a first transformation parameter corresponding to a geometric transformation of a preset type, and perform the geometric transformation of the preset type on the to-be-detected image according to the first transformation parameter.

In one embodiment, the geometric transformation of the preset type includes at least one of: image flipping, image cropping, image rotation, or image translation.

In one embodiment, the liveness detection server 104 is further configured to perform at least one of the following steps. The to-be-detected image is flipped along a preset direction according to a random flipping parameter. The to-be-detected image is cropped according to a random cropping parameter. The to-be-detected image is rotated according to a random rotation parameter. The to-be-detected image is shifted along a preset direction according to a random translation parameter.

In one embodiment, the liveness detection server 104 is further configured to obtain a second transformation parameter corresponding to image attribute adjustment of the preset type, and adjust an image attribute of the to-be-detected image according to the second transformation parameter and the image attribute adjustment of the preset type.

In one embodiment, the image attribute adjustment of the preset type includes one or both of random occlusion and graying.

In one embodiment, the liveness detection server 104 is further configured to perform at least one of following steps. A random occluded region is determined in the to-be-detected image according to a random number, and a pixel value of each pixel in the random occluded region is set to be a preset value. The to-be-detected image is subject to graying to obtain a corresponding grayscale image. Brightness of the to-be-detected image is adjusted according to a random parameter for brightness adjustment. Contrast of the to-be-detected image is adjusted according to a random parameter for contrast adjustment.

In one embodiment, the liveness detection server 104 is further configured to obtain the liveness detection model through model training according to the sample image, the extended sample images corresponding to the sample image, and actual liveness categories corresponding to the sample image and the extended sample images, respectively, and perform the liveness detection on each extended image respectively through the liveness detection model to obtain the corresponding detection result.

In one embodiment, the liveness detection server 104 is further configured to count the detection results which indicate the to-be-detected object being live in the to-be-detected image to obtain a first quantity of these detection results, count the detection results which indicate the to-be-detected object being not live in the to-be-detected image to obtain a second quantity of these detection results, and determine that the to-be-detected object is live in the to-be-detected image in a case that the first quantity is greater than the second quantity.

Hereinabove illustrated are the system for face liveness detection. After the live detection server receives the to-be-detected image transmitted by the terminal, the live detection server performs the data augmentation on the to-be-detected image to obtain the multiple extended images corresponding to the to-be-detected image, and performs the liveness detection on the obtained extended images to obtain the detection results, such that it is determine whether the to-be-detected object is live in the to-be-detected image according to the detection results. Hence, as long as the terminal uploads few to-be-detected images, for example, having a quantity of one, two, or three, the liveness detection is capable to perform based on the to-be-detected image(s). It is not necessary that the terminal uploads a large quantity of images, and hence a user needs not to wait for a long transmission delay due to uploading the images, improving user's experience. Moreover, it is the extended images obtained from the data augmentation that serve as an object of the liveness detection, which enriches data and improve accuracy of liveness detection.

Reference is made to Figure 12. In one embodiment, an apparatus 1200 for face liveness detection is provided. The apparatus may include a software module, a hardware module, or a combination of the two, and serve as a part of a liveness detection server. Specifically, the apparatus includes an obtaining module 1202, an augmentation module 1204, a detection module 1206, and a fusing module 1208.

The obtaining module 1202 is configured to receive a to-be-detected image transmitted by a terminal.

The augmentation module 1204 is configured to perform data augmentation on the to-be-detected image to obtain extended images corresponding to the to-be-detected image, where a quantity of the extended images is greater than one.

The detection module 1206 is configured to perform liveness detection on each extended images to obtain a detection result corresponding to such extended image, where the liveness detection is performed through a liveness detection model, which is obtained by training an initial neural network model based on a sample image and extended sample images corresponding to the sample image.

The fusing module 1208 is configured to determine whether the to-be-detected object is live in the to-be-detected image according to the detection result corresponding to each extended images.

In one embodiment, the augmentation module 1204 includes a parameter obtaining unit and a geometric transformation unit.

The parameter obtaining unit is configured to obtain a first transformation parameter corresponding to a geometric transformation of a preset type.

The geometric transformation unit is configured to perform geometric transformation of the first type on the to-be-detected image according to the first transformation parameter.

In one embodiment, the geometric transformation of the preset type includes at least one of: image flipping, image cropping, image rotation, or image translation.

In one embodiment, the geometric transformation unit is further configured to: flip the to-be-detected image along a preset direction according to a random flipping parameter, and/or crop the to-be-detected image according to a random cropping parameter, and/or rotate the to-be-detected image according to a random rotation parameter, and/or shift the to-be-detected image along a preset direction according to a random translation parameter.

In one embodiment, the augmentation module 1204 includes a parameter obtaining unit and an image attribute adjustment unit.

The parameter obtaining unit is configured to obtain a second transformation parameter corresponding to an image attribute adjustment of a preset type.

The image attribute adjustment unit is configured to adjust an image attribute of the to-be-detected image according to the second transformation parameter and the image attribute adjustment of the preset type.

In one embodiment, the image attribute adjustment of the preset type includes one or both of random occlusion and graying.

In one embodiment, the image attribute adjustment unit is further configured to determine a random occluded region in the to-be-detected image according to a random number and set a pixel value of each pixel in the random occluded region to be a preset value, and/or perform graying on the to-be-detected image to obtain a corresponding grayscale image, and/or adjust brightness of the to-be-detected image according to a random parameter for brightness adjustment, and/or adjust contrast of the to-be-detected image according to a random parameter for contrast adjustment.

In one embodiment, the detection module 1206 is further configured to obtain the liveness detection model through model training according to the sample image, the extended sample images corresponding to the sample image, and actual liveness categories corresponding to the sample image and the extended sample images, respectively, and perform the liveness detection on each extended image respectively through the liveness detection model to obtain the corresponding detection result.

In one embodiment, the fusing module 1208 is further configured to count the detection results which indicate the to-be-detected object being live in the to-be-detected image to obtain a first quantity of these detection results, count the detection results which indicate the to-be-detected object being not live in the to-be-detected image to obtain a second quantity of these detection results, and determine that the to-be-detected object is live in the to-be-detected image in a case that the first quantity is greater than the second quantity.

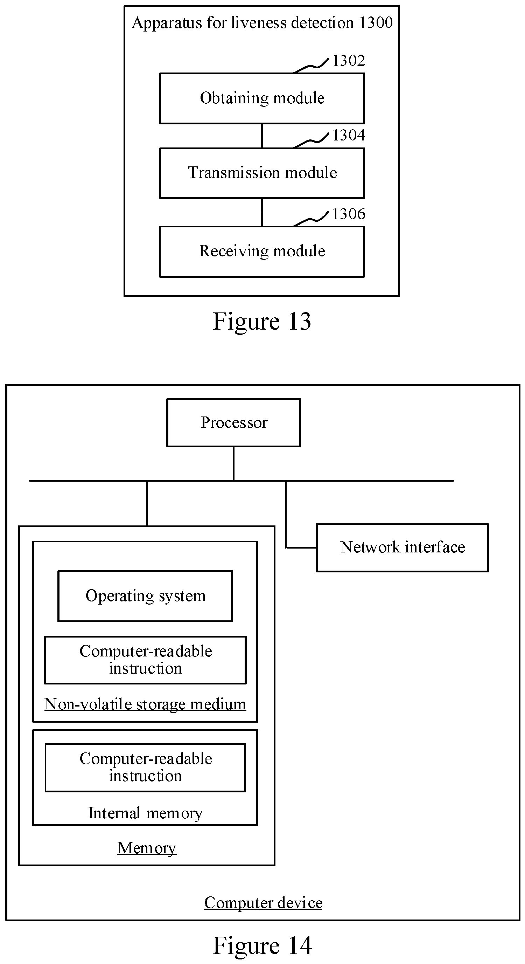

Reference is made to Figure 13. In one embodiment, an apparatus 1300 for face liveness detection is provided. The apparatus may include a software module, a hardware module, or a combination of the two, and serve as a part of a terminal. Specifically, the apparatus includes an obtaining module 1302, a transmission module 1304, and a receiving module 1306.

The obtaining module 1302 is configured to obtain a to-be-detected image.

The transmission module 1304 is configured to transmit the to-be-detected image to a liveness detection server.

The to-be-detected image transmitted to the liveness detection server is configured to trigger the liveness detection server to perform following options. The liveness detection server is triggered to perform data augmentation on the to-be-detected image to obtain multiple extended images corresponding to the to-be-detected image, performs liveness detection on the extended images to obtain intermediate detection results of the extended images, and fuse the intermediate detection results to obtains a liveness detection result with respect to the to-be-detected object being in the to-be-detected image. The liveness detection is performed through a liveness detection model, which is obtained by training an initial neural network model according to a sample image and extended sample images corresponding to the sample image.

The receiving module 1306 is configured to receive the liveness detection result returned by the liveness detection server.

Hereinabove illustrated are the apparatuses for face liveness detection. After the to-be-detected image transmitted by the terminal is received, the data augmentation is performed on the to-be-detected image to obtain the multiple extended images corresponding to the to-be-detected image, and the liveness detection is performed on the obtained extended images to obtain the detection results, such that it is determine whether the to-be-detected object is live in the to-be-detected image according to the detection results. Hence, as long as the terminal uploads few to-be-detected images, for example, having a quantity of one, two, or three, the liveness detection is capable to perform based on the to-be-detected image(s). It is not necessary that the terminal uploads a large quantity of images, and hence a user needs not to wait for a long transmission delay due to uploading the images, improving user's experience. Moreover, it is the extended images obtained from the data augmentation that serve as an object of the liveness detection, which enriches data and improve accuracy of liveness detection.

Specific limitations on the apparatuses 1200 and 1300 for face liveness detection may refer to those on the methods in the foregoing description, and are not repeated herein. Each module in the foregoing apparatuses for face liveness detection may be wholly or partially implemented through software, hardware, or a combination of the two. The foregoing modules may be hardware built in, or independent from, a processor of a computer device, or may be software stored in a memory of the computer device, so as to facilitate the processor invoking the foregoing modules to perform corresponding operations.

In one embodiment, a computer device is provided. The computer device may be a liveness detection server, and an internal structural diagram thereof may be as shown in Figure 14. The computer device includes a processor, a memory, and a network interface that are connected via a system bus. The processor of the computer device is configured to provide computing and control capabilities. The memory of the computer device includes a non-volatile storage medium and an internal memory. The non-volatile storage medium stores an operating system and computer-readable instructions. The internal memory provides an environment for running the operating system and the computer-readable instructions in the non-volatile storage medium. The network interface of the computer device is configured to connect and communicate with another computer device via a network. The computer-readable instructions when executed by the processor implements the foregoing method for face liveness detection.

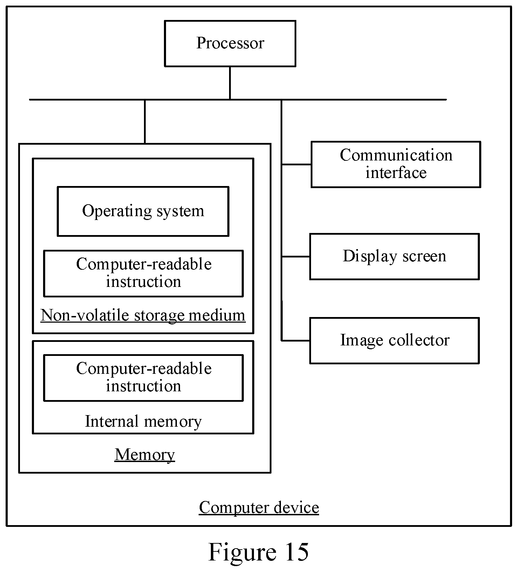

In an embodiment, a computer device is provided. The computer device may be a terminal, and an internal structural diagram thereof may be as shown in Figure 15. The computer device includes a processor, a memory, and a communication interface, a display screen, and an image collector that are connected via a system bus. The processor of the computer device is configured to provide computing and control capabilities. The memory of the computer device includes a non-volatile storage medium and an internal memory. The non-volatile storage medium stores an operating system and computer-readable instructions. The internal memory provides an environment for running the operating system and the computer-readable instructions in the non-volatile storage medium. The communication interface of the computer device is configured to communicate with an external terminal in a wired or wireless manner. The wireless communication may be implemented by Wi-Fi, an operator network, near field communication (NFC), or other technologies. The computer-readable instructions when executed by the processor implements the foregoing method for face liveness detection. The display screen of the computer device may be a liquid crystal display screen or an electronic ink display screen. An input apparatus of the computer device may be a touch control layer covering the display screen, may be a button, a trackball, or a touchpad disposed on housing of the computer device, and may be a keyboard, a touchpad, a mouse, or the like that is connected to the computer device. The image collector of the computer device may be a camera or the like.

The structures as shown in Figure 14 and Figure 15 are merely block diagrams of some structures related to the present disclosure, and do not constitute a limitation on the computer devices to which the present disclosure is applicable. A specific example of such computer devices may include components more or less than those as shown in Figures 14 or 15, some components as shown may be combined, or the components as shown may have different arrangement.

In one embodiment, a computer device is further provided. The computer device includes a memory and a processor. The memory stores computer-readable instructions, and the computer-readable instructions when executed by the processor implement the steps in the foregoing method embodiments.

In one embodiment, a computer-readable storage medium is provided. The computer-readable storage medium stores computer-readable instructions, and the computer-readable instructions when executed by a processor implement the steps in the foregoing method embodiments.

In an embodiment, a computer program product or a computer program is provided. The computer program product or the computer program includes computer instructions. The computer instructions are stored in a computer-readable storage medium. A processor of a computer device reads the computer instruction from the computer-readable storage medium, and executes the computer instructions, so as to configure the computer device to perform the steps in the foregoing method embodiments.

Those skilled in the art may understand that all or some of procedures of the method in the foregoing embodiments may be implemented by a computer program instructing relevant hardware. The program may be stored in a non-volatile computer-readable storage medium. The procedures of the foregoing method embodiments may be implemented when the program is executed. All references to the memory, the storage, the database, or other medium used in embodiments of the present disclosure may include a non-volatile and/or a volatile memory. The non-volatile memory may include a read-only memory (ROM), a cassette, a floppy disk, a flash memory, and an optical storage. The volatile memory may include a random access memory (RAM) or an external cache. By way of description rather than limitation, the RAM may be implemented in various forms, such as a static RAM (SRAM) and a dynamic RAM (DRAM).

Technical features of the foregoing embodiments may be arbitrarily combined. In order to make description concise, not all possible combinations of the technical features in the foregoing embodiments are described. The combinations of these technical features shall be considered as falling within the scope covered by this specification as long as there is no conflict.

The foregoing embodiments only show some implementations of the present disclosure, and are described in detail. These embodiments should not be construed as a limitation on the scope of the present disclosure. Several transformations and improvements can be made by those skilled in the art without departing from the concept of the present disclosure, and belong to the protection scope of the present disclosure. Therefore, the protection scope of the present disclosure shall be subject to the appended claims.

## Claims

1. A method for face liveness detection, executable by a computer device, wherein the method comprises:
receiving a to-be-detected image that is transmitted by a terminal, wherein the to-be-detected image comprises a face of a to-be-detected object;
performing data augmentation on the to-be-detected image to obtain extended images corresponding to the to-be-detected image, wherein a quantity of the extended images is greater than one;
performing liveness detection on the extended images to obtain intermediate detection results for the extended images, wherein the liveness detection is performed through a liveness detection model, and the liveness detection model is obtained by training an initial neural network model based on a sample image and extended sample images corresponding to the sample image; and
fusing the intermediate detection results to obtain a liveness detection result with respect to the to-be-detected object being in the to-be-detected image.

2. The method according to claim 1, wherein performing the data augmentation on the to-be-detected image comprises:
obtaining a first transformation parameter corresponding to a geometric transformation of a preset type; and
performing the geometric transformation of the preset type on the to-be-detected image according to the first transformation parameter.

3. The method according to claim 2, wherein the geometric transformation of the preset type comprises at least one of: image flipping, image cropping, image rotation, or image translation.

4. The method according to claim 2, wherein performing the geometric transformation of the preset type on the to-be-detected image according to the first transformation parameter comprises at least one of:
flipping the to-be-detected image along a preset direction according to a random flipping parameter;
cropping the to-be-detected image according to a random cropping parameter;
rotating the to-be-detected image according to a random rotation parameter; or
shifting the to-be-detected image along a preset direction according to a random translation parameter.

5. The method according to claim 1, wherein performing the data augmentation on the to-be-detected image comprises:
obtaining a second transformation parameter corresponding to image attribute adjustment of the preset type; and
adjusting an image attribute of the to-be-detected image according to the second transformation parameter and the image attribute adjustment of the preset type.

6. The method according to claim 5, wherein the image attribute adjustment of the preset type comprises at least one of: random image occlusion, graying, image brightness adjustment, and image contrast adjustment.

7. The method according to claim 5, wherein adjusting the image attribute of the to-be-detected image according to the second transformation parameter and the image attribute adjustment of the preset type comprises at least one of:
determining a random occluded region in the to-be-detected image according to a random number, and setting a pixel value of each pixel in the random occluded area to be a preset value;
performing graying on the to-be-detected image to obtain a corresponding grayscale image;
adjusting brightness of the to-be-detected image according to a random parameter for brightness adjustment; or
adjusting contrast of the to-be-detected image according to a random parameter for contrast adjustment.

8. The method according to claim 1, wherein performing the liveness detection on the extended images to obtain the intermediate detection results for the extended images comprises:
obtaining the liveness detection model through model training according to the sample image, the extended sample images corresponding to the sample image, and actual liveness categories corresponding to the sample image and the extended sample images, respectively; and
performing the liveness detection on each extended image through the liveness detection model to obtain the intermediate detection result corresponding to said extended image.

9. The method according to any one of claims 1 to 8, wherein fusing the intermediate detection results to obtain the liveness detection result with respect to the to-be-detected object being in the to-be-detected image comprises:
counting the detection results which indicate the to-be-detected object being live in the to-be-detected image to obtain a first quantity;
counting the detection results which indicate the to-be-detected object being not live in the to-be-detected image to obtain a second quantity; and
determining that the to-be-detected object is live in the to-be-detected image in a case that the first quantity is greater than the second quantity.

10. A system for face liveness detection, comprising a terminal and a liveness detection server, wherein:
the terminal is configured to obtain a to-be-detected image, wherein the to-be-detected image comprises a face of a to-be-detected object;
the terminal is further configured to transmit the to-be-detected image to the liveness detection server;
the liveness detection server is configured to receive the to-be-detected image, and perform data augmentation on the to-be-detected image to obtain extended images corresponding to the to-be-detected image, wherein a quantity of the extended images is greater than one;
the liveness detection server is further configured to perform liveness detection on the extended images to obtain intermediate detection results for the extended images, and fuse the intermediate detection results to obtain a liveness detection result with respect to the to-be-detected object being in the to-be-detected image, wherein the liveness detection is performed through a liveness detection model, which is obtained by training an initial neural network model based on a sample image and extended sample images corresponding to the sample image; and
the liveness detection server is further configured to return the liveness detection result to the terminal.

11. An apparatus for face liveness detection, comprising:
an obtaining module, configured to receive a to-be-detected image that is transmitted by a terminal, wherein the to-be-detected image comprises a face of a to-be-detected object;
an augmentation module, configured to perform data augmentation on the to-be-detected image to obtain extended images corresponding to the to-be-detected image, wherein a quantity of the extended images is greater than one;
a detection module, configured to perform liveness detection on the extended images to obtain intermediate detection results for the extended images, wherein the liveness detection is performed through a liveness detection model, which is obtained by training an initial neural network model based on a sample image and extended sample images corresponding to the sample image; and
a fusing module, configured to fuse the intermediate detection results to obtain a liveness detection result with respect to the to-be-detected object being in the to-be-detected image.

12. The apparatus according to claim 11, wherein the augmentation module comprises:
a parameter obtaining unit, configured to obtain a first transformation parameter corresponding to a geometric transformation of a preset type; and
a geometric transformation unit, configured to perform geometric transformation of the first type on the to-be-detected image according to the first transformation parameter.

13. The apparatus according to claim 12, wherein the geometric transformation of the preset type comprises at least one of: image flipping, image cropping, image rotation, or image translation.

14. The apparatus according to claim 12, wherein the geometric transformation unit is further configured to perform at least one of:
flipping the to-be-detected image along a preset direction according to a random flipping parameter;
cropping the to-be-detected image according to a random cropping parameter;
rotating the to-be-detected image according to a random rotation parameter; or
shifting the to-be-detected image along a preset direction according to a random translation parameter.

15. The apparatus according to claim 11, wherein the augmentation module comprises:
a parameter obtaining unit, configured to obtain a second transformation parameter corresponding to an image attribute adjustment of a preset type; and
an image attribute adjustment unit, configured to adjust an image attribute of the to-be-detected image according to the second transformation parameter and the image attribute adjustment of the preset type.

16. The apparatus according to claim 15, wherein the image attribute adjustment unit is further configured to perform at least one of:
determining a random occluded region in the to-be-detected image according to a random number, and setting a pixel value of each pixel in the random occluded area to be a preset value;
performing graying on the to-be-detected image to obtain a corresponding grayscale image;
adjusting brightness of the to-be-detected image according to a random parameter for brightness adjustment; or
adjusting contrast of the to-be-detected image according to a random parameter for contrast adjustment.

17. The apparatus according to claim 11, wherein the detection module is further configured to:
obtain the liveness detection model through model training according to the sample image, the extended sample images corresponding to the sample image, and actual liveness categories corresponding to the sample image and the extended sample images, respectively; and
perform the liveness detection on each extended image through the liveness detection model to obtain the intermediate detection result corresponding to said extended image.

18. The apparatus according to any one of claims 11 to 17, wherein the fusing module is further configured to:
count the detection results which indicate the to-be-detected object being live in the to-be-detected image to obtain a first quantity;
count the detection results which indicate the to-be-detected object being not live in the to-be-detected image to obtain a second quantity; and
determine that the to-be-detected object is live in the to-be-detected image in a case that the first quantity is greater than the second quantity.

19. A computer device, comprising a memory and one or more processors, wherein:
the memory stores computer-readable instructions; and
the computer-readable instructions when executed by the one or more processors configure the one or more processors to implement the method according to any one of claims 1 to 9.

20. A non-volatile computer-readable storage medium, storing computer-readable instructions, wherein:
the computer-readable instructions when executed by one or more processors configure the one or more processors to implement the method according to any one of claims 1 to 9.
